# EUROPEAN PATENT SPECIFICATION

(11) **EP 1 547 265 B1**
(45) Date of publication and mention of the grant of the patent: **14.11.2007**
(21) Application number: 03759546.9
(22) Date of filing: 29.09.2003
(51) Int. Cl.: H04B 1/69

(54) **A composite waveform for ultra-wideband system**
EINE zusammengestzte Wellenform für ein Ultrabreitband-System
Une forme d'onde composite à bande ultra-large

(30) Priority: 01.10.2002 US 263364
(43) Date of publication of application: 29.06.2005
(73) Proprietor: INTEL CORPORATION, Santa Clara, CA 95052 (US)
(72) Inventor: LEEPER, David, Scottsdale, AZ 85260 (US); ENGLAND, David, Chandler, AZ 85248 (US)
(74) Representative: Dunlop, Hugh Christopher
(86) International application number: PCT/US2003/030550
(87) International publication number: WO 2004/032358

(56) References cited:
- WO-A-02/052740
- US-A1- 2001 019 312
- ENGLER H F JR: "Systems considerations for large percent-bandwidth radar" PROCEEDINGS OF THE NATIONAL TELESYSTEMS CONFERENCE. ATLANTA, MARCH 26 - 27, 1991, NEW YORK, IEEE, US, vol. 1, 26 March 1991 (1991-03-26), pages 133-137, XP010047016 ISBN: 0-7803-0062-9

## Description

### BACKGROUND

Today's wireless communication systems may employ many different types of apparatuses and methods to wirelessly transfer information. Determining the appropriate architectures and air interface protocols to transfer information in a particular system may be problematic. Factors such as cost, power consumption, reuse of spectrum, bandwidth, data rate, distance, and system capacity may be considered when designing a particular system.

In radar systems, wideband waveforms are analysed as in Engler H F JR, "Systems considerations for large percent-bandwidth radar", IEEE Proceedings of National Telesystems Conference, Atlanta, March 1991, pages 133-137, where characteristics of various types radar waveforms such as baseband waveforms and ultra-wideband monocycle and polycycle waveforms is disclosed. The performance these waveforms is assessed in connection with various radar system capabilities and characteristics, such as target detection, target imaging/identification and clutter rejection. In addition, US 2001/0019312A1 discloses a circuit for performing analog waveform to pulse sequence conversion.

Thus, there is a continuing need for alternate ways to transfer information.

### BRIEF DESCRIPTION OF THE DRAWINGS

The subject matter regarded as the invention is particularly pointed out and distinctly claimed in the concluding portion of the specification. The present invention, however, both as to organization and method of operation, together with objects, features, and advantages thereof, may best be understood by reference to the following detailed description when read with the accompanying drawings in which:
FIG. 1 is a diagram illustrating a waveform in the time domain in accordance with an embodiment of the present invention;
FIG. 2 is a diagram illustrating the waveform of FIG. 1 in the frequency domain in accordance with an embodiment of the present invention;
FIG. 3 is a diagram illustrating a waveform in the time domain in accordance with an embodiment of the present invention;
FIG. 4 is a diagram illustrating the waveform of FIG. 3 in the frequency domain in accordance with an embodiment of the present invention;
FIG. 5 is a diagram illustrating a waveform in the time domain in accordance with an embodiment of the present invention;
FIG. 6 is a block diagram illustrating a portion of a communication system in accordance with an embodiment of the present invention;
FIG. 7 is a block diagram illustrating a circuit in accordance with an embodiment of the present invention;
FIG. 8 is a diagram illustrating a waveform in the time domain in accordance with an embodiment of the present invention; and
FIG. 9 is a diagram illustrating a waveform in the time domain in accordance with an embodiment of the present invention.

It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

### DETAILED DESCRIPTION

In the following detailed description, numerous specific details are set forth in order to provide a thorough understanding of the present invention. However, it will be understood by those skilled in the art that the present invention may be practiced without these specific details. In other instances, well-known methods, procedures, components and circuits have not been described in detail so as not to obscure the present invention.

Embodiments of the present invention may include an apparatus for performing the operations herein. This apparatus may be specially constructed for the desired purposes, or it may comprise a general purpose computing device selectively activated or reconfigured by a program stored in the device. Such a program may be stored on a storage medium, such as, but is not limited to, any type of disk including floppy disks, optical disks, CD-ROMs, magnetic-optical disks, electromechanical disks, read-only memories (ROMs), random access memories (RAMs), electrically programmable read-only memories (EPROMs), electrically erasable and programmable read only memories (EEPROMs), flash memory, magnetic or optical cards, or any other type of media suitable for storing electronic instructions and data.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

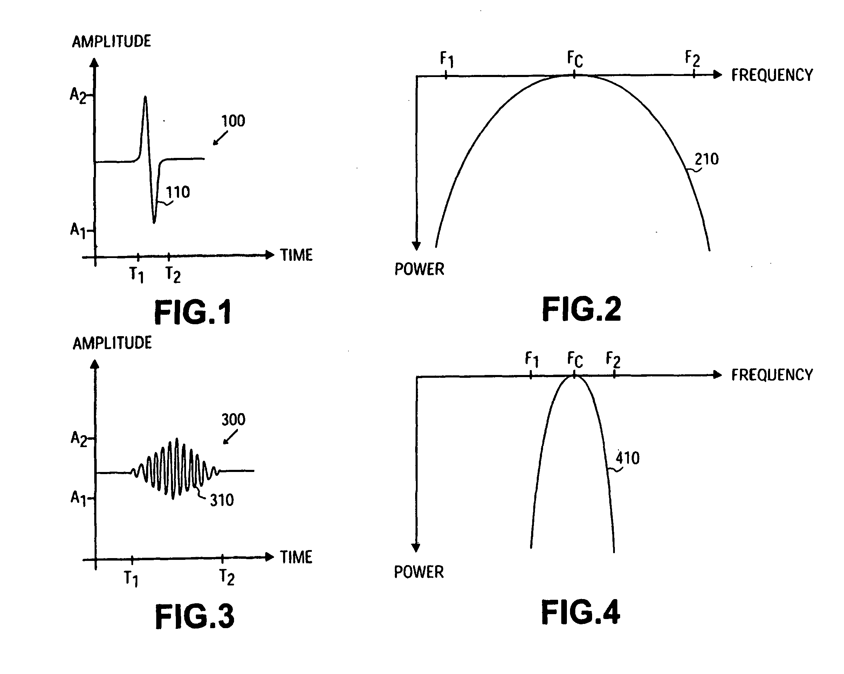

Turning to FIG. 1, a diagram illustrating a waveform 100 in the time domain is illustrated. TIME is denoted along the x-axis and AMPLITUDE is denoted along the y-axis.

In this diagram, waveform 100 may be referred to as a Gaussian monocycle signal 110. That is, waveform 100 includes a single-cycle, sinusoidal signal and may be referred to simply as a monocycle signal. Monocycle signal 110 may also be generally referred to as an impulse, a pulsed signal, a pulse signal, a wideband radio frequency (RF) signal, a RF impulse signal, a RF pulse signal, a pulsed RF signal, or an ultrawideband (UWB) signal. More specifically, monocycle signal 110 may be referred to as a monocycle pulse or a monopulse signal. Various other terms may also be used to refer to monocycle signal 110. Monocycle signal 110 has a pulse width or duration of T₂-T₁ and a maximum amplitude of A₂ and a minimum amplitude of A₁.

Turning to FIG. 2, a diagram of the waveform of FIG. 1 in the frequency domain is illustrated (referred to as signal 210). The center frequency (labeled Fc) and the bandwidth (F₂-F₁) of signal 210 may be dependent upon the duration of monocycle signal 110. In some embodiments, the center frequency of a monocycle signal may be approximately equal to the reciprocal of its duration and the bandwidth may be approximately 160% of the center frequency. For example, if monocycle signal 110 has a duration of about 0.5 nanoseconds (ns) in the time domain, then the center frequency of monocycle signal 110 in the frequency domain may be about 2.0 gigahertz (GHz) and the bandwidth of monocycle signal 110 in the frequency domain may be about 3.2 GHz, although the scope of the present invention is not limited in this respect.

A wireless communication system may transfer one or more bits of information using monocycle signal 110. Or alternatively, a system may use a pulse train, which includes multiple monocycle signals, to transfer one bit of information.

It should be noted that herein that the terms data and information may be used interchangeably. In addition, the terms information and data may refer to a single bit of information or may refer to more than one bit of information.

It should be noted that an ideal Gaussian monocycle signal 110 is illustrated in FIG. 1. However, in practice, rather than using an ideal Gaussian monocycle signal to transfer information, a non-ideal monocycle signal (not shown) may be used to transfer information in a communication system. In the frequency domain, a non-ideal monocycle signal may have a reduced bandwidth compared to an ideal monocycle signal.

Turning to FIG. 3, a diagram illustrating a waveform 300 in the time domain is illustrated. TIME is denoted along the x-axis and AMPLITUDE is denoted along the y-axis.

Waveform 300 may be referred to as a multicycle signal 310. That is, multicycle signal 310 is a multiple cycle sinusoidal signal and may be a time-limited segment of an underlying sinusoid that includes several (e.g., two or more) cycles of the sinusoid. In some embodiments, a multicycle signal may be several cycles of a sine wave with an envelope. Although the scope of the present invention is not limited in this respect, multicycle signal 310 may be damped at the beginning and at the end of the segment, creating a shaped envelope for multicycle signal 310 as shown in FIG. 3. Multicycle signal 310 may be generated by a sustained burst of energy at a single frequency. A multicycle signal may refer to a pulse that consists of a burst of cycles, whereas a monocycle signal may refer to a pulse having less than two cycles. Multicycle signal 310 has a pulse width or duration of T₂-T₁ and a maximum amplitude of A₂ and a minimum amplitude of A₁.

Multicycle signal 310 may be generally referred to as an impulse, a pulsed signal, a pulse signal, a wideband radio frequency (RF) signal, a RF impulse signal, a RF pulse signal, a pulsed RF signal, or a UWB signal. More specifically, multicycle signal 310 may be referred to as a non-monocycle signal, a burst signal, a tone signal, a tone-burst signal, a multipulse signal, or a subband pulse signal. Various other terms may also be used to refer to multicycle signal 310.

Turning to FIG. 4, a diagram of the waveform of FIG. 3 in the frequency domain is illustrated (referred to as signal 410). The center frequency (labeled Fc) and the bandwidth (F₂-F₁) of signal 410 may be dependent upon the duration of multicycle signal 310. In some embodiments, the center frequency of a monocycle signal may be approximately equal to the reciprocal of its duration and the bandwidth may be approximately 160% of the center frequency. For example, if multicycle signal 410 has a duration of about 2 nanoseconds (ns) in the time domain, then the center frequency of monocycle signal 110 in the frequency domain may be about 500 megahertz (MHz) and the bandwidth of monocycle signal 110 in the frequency domain may be about 800 MHz, although the scope of the present invention is not limited in this respect.

Although the same amplitude, time, and frequency designations (e.g., T₁, T₂, A₁, A₂, F₁, F₂, F_{c}) are used in FIGS. 1-4, these designations may correspond to different times, amplitudes, and frequencies.

A wireless communication system may transfer one or more bits of information using multicycle signal 310. Or alternatively, a system may use a pulse train, which includes multiple multicycle signals, to transfer one bit of information.

Information may be communicated or transferred between two devices by modulating multicycle signal 310 or monocycle signal 110. By varying the amplitude, polarity, timing or other characteristic of monocycle signal 110, information may be coded using monocycle signal 110. One timing modulation scheme, which may be referred to as time shifting or pulse position modulation, may include moving the position of the pulse in time relative to a nominal position. Similarly, varying the amplitude, polarity, timing or other characteristic of multicycle signal 310 may be used to modulate multicycle signal 310.

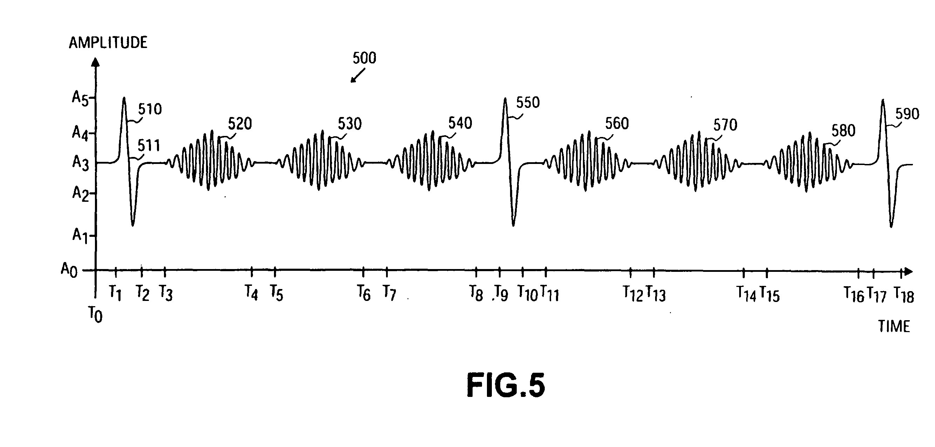

FIG. 5 is a diagram illustrating a waveform 500 in the time domain in accordance with an embodiment of the present invention. Waveform 500 may be referred to as a hybrid waveform or a combined waveform that includes a monocycle signal 510, respectively followed by multicycle signals 520, 530, and 540. Waveform 500 may further include a monocycle signal 550 following multicycle signal 540; multicycle signals 560, 570, and 580 following monocycle signal 550; and monocycle signal 590 following multicycle signal 590. Waveform 500 may be used in a UWB communication system and may be generally referred to as a UWB waveform.

Wireless communication systems that transfer information using waveform 100 (FIG. 1), waveform 300 (FIG. 3), or waveform 500 (FIG. 5) may be referred to as ultrawideband (UWB) systems. Various other terms may be used to refer to transmission systems using waveforms 100, 300, or 500. For example, a communication system using waveforms 100, 300, or 500 may be referred to as a carrierless, baseband, impulse radio (IR), or impulse-based system.

Turning back to FIG. 5, in this embodiment, monocycle signals 510, 550, and 590 may have maximum amplitudes of about A₅ and minimum amplitudes of about A₁. Multicycle signals 520, 530, 540, 560, 570, and 580 may have maximum amplitudes of about A₄ and minimum amplitudes of about A₂. In this embodiment, the maximum amplitude of monocycle signal 510 may be greater than the maximum amplitudes of multicycle signals 520, 530, 540, 560, 570, and 580 and the minimum amplitude of monocycle signal 510 may be less than the minimum amplitudes of multicycle signals 520, 530, 540, 560, 570, and 580.

Although the scope of the present invention is riot limited in this respect, in the embodiment illustrated in FIG. 5, the duration (T₂-T₁) of monocycle signal 510 may be approximately equal to the duration (T₁₀-T₉) of monocycle signal 550 and approximately equal to the duration (T₁₈-T₁₇) of monocycle signal 590. The duration of multicycle signals 520, 530, 540, 560, 570, and 580 may be approximately equal to each other. In addition, in this embodiment, the duration of monocycle signals 510, 550, and 590 may be less than the durations of multicycle signals 520, 530, 540, 560, 570, and 580.

In one embodiment, a wireless communication system may transfer one or more bits of information between two devices using waveform 500. For example, a bit of information may be transferred using monocycle signal 510 and another bit of information may be transferred using multicycle signal 520. In addition, seven other bits of information may be transferred using signals 530, 540, 550, 560, 570, 580, and 590, respectively. Alternatively, in other embodiments, a single bit of information may be transferred from a device using more than one monocycle signal of waveform 500 (e.g., monocycle signals 510, 550, and 590). In addition, a single bit of information may be transferred from a device using more than one multicycle signal of waveform 500 (e.g., multicycle signals 520, 530, 540, 560, 570, and 580).

It should be noted that although waveform 500 is illustrated as having only three monocycle signals, that this is not a limitation of the present invention. In alternate embodiments, waveform 500 may include more or less than three monocycle signals. Similarly, although waveform 500 is illustrated as having only six multicycle signals, this is not a limitation of the present invention. In alternate embodiments, waveform 500 may include more or less than six multicycle signals. In one embodiment, a UWB waveform may include a monocycle signal followed by ten multicycle signals (10-to-1 ratio), then followed by another monocycle signal, and finally followed by ten multicycle signals.

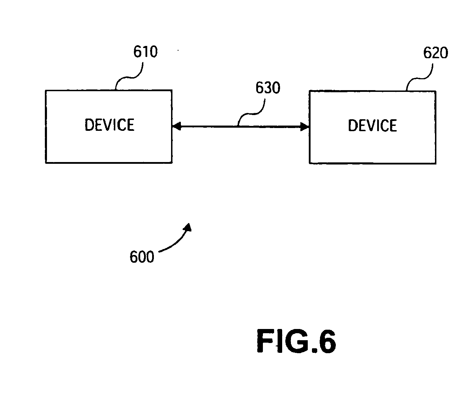

Turning to FIG. 6, a simplified block diagram of a portion of a communication system 600 is illustrated. System 600 may be a wireless system, and information may be transferred between a communication devices 610 and 620 via a bi-directional communication link 630. Devices 610 and 620 may be wireless devices and communication link 630 may be an air interface and may represent one or more communication channels or paths between devices 610 and 620. Devices 610 and 620 may include wireless transceivers (not shown) and antennas (not shown) to transfer information using radio frequency (RF) signals. Devices 610 and 620 may be access points (AP), personal digital assistants (PDAs), laptop and portable computers with wireless capability, web tablets, wireless telephones, wireless headsets, pagers, instant messaging devices, digital music players, digital cameras, or other devices that may be adapted to transmit and/or receive information wirelessly.

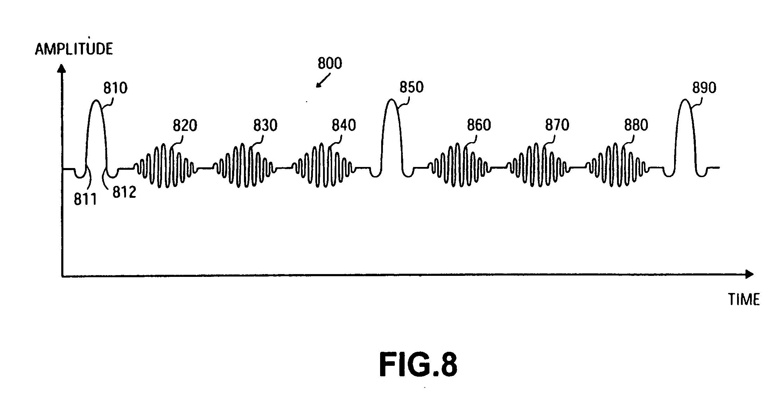

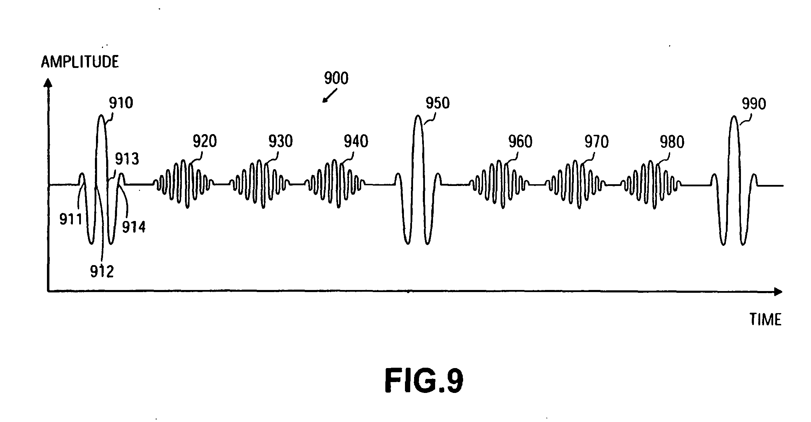

Device 610 may be adapted to process a UWB waveform such as, for example, waveform 100, waveform 300, waveform 500 (discussed above with reference to FIG. 5), waveform 800 (discussed below with reference to FIG. 8), or waveform 900 (discussed below with reference to FIG. 9). In some embodiments, a UWB waveform may refer to an RF signal having a bandwidth of more than about 20% of its center frequency. In other embodiments, a UWB waveform may refer to an RF signal having a bandwidth of at least about 500 MHz.

Device 610 may be adapted to combine monocycle and multicycle signals to transfer information from device 610 to device 620. In one embodiment, device 610 may include a waveform generator (not shown) capable of generating waveform 500 of FIG. 5 to transfer information from device 610 to device 620. Device 620 may be adapted to process a UWB waveform such as, for example, waveform 500 (FIG. 5), waveform 800 (FIG. 8), or waveform 900 (FIG. 9). For example, device 620 may include detector and decode circuitry (not shown) adapted to receive and recover the information transmitted from device 610.

In some embodiments, devices 610 and 620 may be part of a wireless local area network (WLAN) and adapted to communicate information using wideband RF signals at distances of less than about 100 meters (m), although the scope of the present invention is not limited in this respect. As an example, in one embodiment a WLAN system may include a computer having a WLAN adapter card and a base station hooked up to a fixed-line network. The WLAN may be used to establish a radio connection over a distance up to about 100 meters between the base station and the computer. In other embodiments, devices 610 and 620 may be part of a wireless personal area network (WPAN) and adapted to communicate information using wideband RF signals at distances of less than about 10 meters.

Referring to both FIGS. 5 and 6, in some embodiments, monocycle signals 510, 550, and 590 of waveform 500 may be used to transfer one type of information between devices 610 and 620 and multicycle signals 520, 530, 540, 560, 570, and 580 of waveform 500 may be used to transfer another type of information between devices 610 and 620. For example, in one embodiment, user information may be transferred between devices 610 and 620 using multicycle signals 520, 530, 540, 560, 570, and 580 of waveform 500 and control, timing, or security information may be transferred between devices 610 and 620 using monocycle signals 510, 550, and 590 of waveform 500.

Examples of user information may include spreadsheet, word processing, video, audio, picture, email, or web page information, although the scope of the present invention is not limited in this respect. Examples of control and timing information may include information to set up a communication path, information to tear down a communication path, synchronization information, information for multiple access coordination, information for data rate adaptation, and information to determine communication link quality between two devices, although the scope of the present invention is not limited in this respect. Examples of security information include authorization, authentication, and secure key exchange for encryption information.

As an example, in one embodiment, in order to tear down a communication path, one or more of the monocycle signals of waveform 500 may be used to signal the end of a transmission. In order to set up a communication path, a receiving device may use one or more monocycle signals of waveform 500 to establish a receiver clock at the correct frequency and synchronous to the pulse arrival time. In order to synchronize communication between devices 610 and 620, a single monocycle pulse of waveform 500 may be used to "fire" or "trigger" a precision oscillator in the receiving device (e.g., device 620). In alternate embodiments, the receiving device may use a phase locked loop (PLL) or other timing device to receive several (e.g., more than two) monocycle signals and get the receive clock in synch.

Although the scope of the present invention is not limited in this respect, in one embodiment, communication link quality may be determined using a quality parameter such as, for example, bit-error-rate (BER). In this embodiment, the BER of the information transmitted using the monocycle pulses of waveform 500 is monitored to determine quality of the communication link. If the BER is determined to be above a predetermined threshold level, then a signal may be transmitted from the receiving device (e.g., 620) to the transmitting device (e.g., 610) to command the transmitting device to adjust the transmission data rate for both information transmitted using the monocycle signals and information transmitted using the multicycle signals. In other words, if the communication link quality is below a predetermined threshold, then the transmission rates for both information transmitted using the monocycle signals and information transmitted using the multicycle signals may be adjusted. In one embodiment, the transmission data rate may be reduced by, for example, sending double the number of multicycle signals per bit. The receiving device can then integrate the multicycle signals and thus improve the signal-to-noise ratio. The doubling of multicycle signals may continue if the signal degrades again so that more multicycle signals may be integrated per bit to improve the BER.

Although the scope of the present invention is not limited in this respect, in one embodiment, the monocycle signals of waveform 500 may be used to establish a supervisory side channel for communications path set-up, communications path tear-down, multiple access coordination, data rate adaptation, or determination of a communication link quality parameter. The supervisory side channel may also be used to transfer authorization, authentication, or secure key exchange for encryption. In addition, the supervisory side channel may be used for performance monitoring, location sensing, or as a backup user data channel.

The relatively shorter duration, higher amplitude monocycle signals of waveform 500 may be used to determine location of a receiving device (e.g., device 620) or used to determine distance between two devices (e.g., devices 610 and 620).

In some embodiments, waveform 500 may be used to transfer one type of information between devices 610 and 620 using one data rate and to transfer another type information between devices 610 and 620 using another data rate. For example, a relatively low-speed channel may be established using monocycle signals 510, 550, and 590 of waveform 500 and a relatively higher-speed channel may be established using multicycle signals 520, 530, 540, 560, 570, and 580 of waveform 500.

If each multicycle signal of waveform 500 has a relatively greater duration than monocycle signals 510, 550, and 590, then the multicycle signals of waveform 500 may occupy a relatively smaller portion of the total spectrum in the frequency domain compared to monocycle signals 510, 550, and 590. Cycling through several different underlying sinusoids (e.g., 3.5, 4.0, 4.5 GHz, etc.) in successive multicycle signals allows multipath echoes from each multicycle signal to "die out" before attempting to use that portion of the spectrum again. Accordingly, the multicycle signals may allow mitigation of multipath, which may allow higher data rates. In one embodiment, each multicycle signal of waveform 500 may use less than about one gigahertz of spectrum centered around the frequency of the underlying sinusoid, wherein the monocycle signals of waveform 500 may use wider portions of the spectrum with every monocycle signal using at least about two gigahertz.

In one embodiment, information may be transferred between devices 610 and 620 at a data rate of at least about 100 megabits per second using the multicycle signals of waveform 500 and information may be transferred between devices 610 and 620 at a relatively lower data rate of less than about 100 kilobits per second using the monocycle signals of waveform 500.

In some embodiments, one communication path or channel may be established to transfer information between devices 610 and 620 at a relatively lower data rate using the monocycle pulses of waveform 500 and another communication path or channel may be established to transfer information between devices 610 and 620 at a relatively higher data rate using the multicycle pulses of waveform 500.

Stated generally, the embodiment illustrated in FIG. 5 provides a method to communicate information by transferring information between two devices using a combined waveform (e.g., waveform 500) that includes at least two sinusoidal signals (e.g., signals 510 and 520) wherein one sinusoidal signal (e.g., signal 520) has more cycles or zero-crossings than the other sinusoidal signal(e.g., signal 520). In this embodiment, signal 510 has one cycle and one zero-crossing (labeled 511) and signal 520 has more than one cycle and more than one zero-crossing. In some embodiments, the duration of signal 520 may be at least about two times greater than the duration of the signal 510, although the scope of the present invention is not limited in this respect.

Although the embodiment illustrated in FIG. 5 shows single monocycle signals followed by multiple multicycle signals (i.e., waveform 500 includes signal monocycle signals interleaved with multiple multicycle signals), that this is not a limitation of the present invention. In alternate embodiments, a combined waveform may include multiple monocycle signals followed by multiple multicycle signals, and this sequence may be repeated.

The frequencies, amplitudes, timing, and waveform shapes of waveform 500 may be varied depending on system-level considerations including desired data rates, path lengths, number of users, likely interference conditions from other wireless sources, multipath environment, and other factors. Similarly, many modulation schemes may be used for the signals of waveform 500 including on-off keying, amplitude modulation, bipolar modulation, polarity modulation, or pulse position modulation, although the scope of the presentation invention is not limited in this respect.

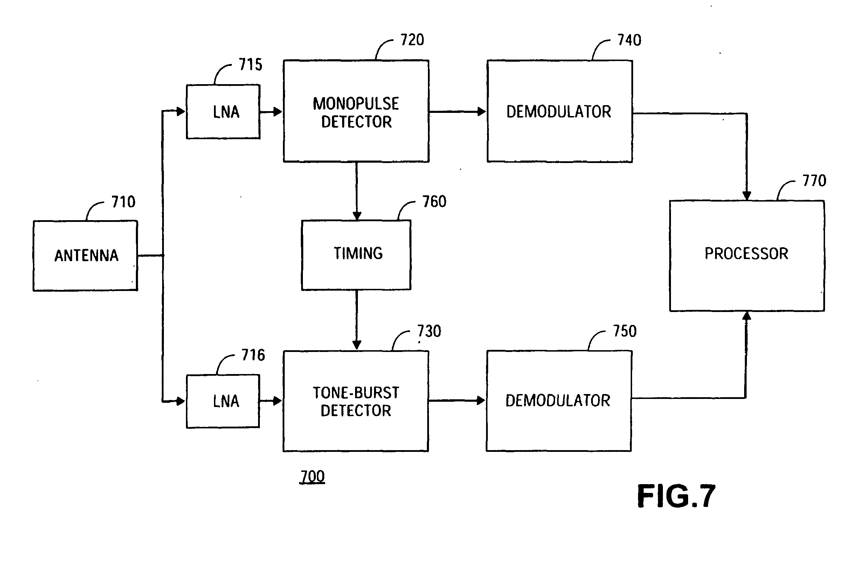

Turning to FIG. 7, a receiver 700 in accordance with an embodiment of the present invention is described. Receiver 700 may be part of a transceiver of communication devices 610 or 620 (FIG. 6) or may be part of a stand-alone receiver. Receiver 700 may be a portion of an integrated circuit (IC) or may comprise more than one integrated circuit. Receiver 700 may be a UWB receiver and may be adapted to process (e.g., receive, detect, and decode) UWB waveforms such as, for example, waveforms 100 (FIG. 1), 300 (FIG. 3), or 500 (FIG. 5). Receiver 700 may also be referred to as a baseband circuit.

Received UWB waveforms transferred to receiver 700 may include monopulse signals similar to monocycle signals 510, 550, and 590 (FIG. 5) and may include tone-burst signals similar to multicycle signals 520, 530, 540, 560, 570, or 580 (FIG. 5). Similar to what was described above, in one embodiment, the monopulse signals of the received UWB waveform may be used to transfer control, timing, and security information to receiver 700 from a transmitting device. The tone-burst signals of the received UWB waveform may be used to transfer user information to receiver 700 from a transmitting device.

Receiver 700 may include an antenna 710 to receive radiated radio frequency (RF) signals generated using UWB waveforms, such as, for example waveform 500. Antenna 710 may comprise one or more antennas, and may be, for example, a dipole antenna, a monopole antenna, a loop antenna, a microstrip antenna, although the scope of the present invention is not limited in this respect.

Receiver 700 may further include low-noise amplifiers (LNA) 715 and 716 connected to antenna 710. In addition, receiver 700 may include a monopulse detector 720 connected to LNA 715 and a tone-burst detector 730 connected to LNA 716. A received signal may be sent to both LNAs 715 and 716 for processing. In alternate embodiments, a single LNA and detector may be used to receive and process received UWB signals.

Monopulse detector 720 and tone-burst detector 730 may be adapted to detect UWB signals by different techniques such as, for example, band-pass filtering, down-conversion to an intermediate frequency (IF), amplitude detection, or direct sampling, although the scope of the present invention is not limited in this respect. Monopulse detector 720 may also be referred to as a monocycle detector and tone-burst detector 730 may also be referred to as subband detector or a multipulse detector.

In one embodiment, monopulse detector 720 may include a correlator (not shown) or a matched filter (not shown) adapted to detect monopulse signals such as, for example, monocycle signals 510, 550, and 590 of waveform 500 (FIG. 5). A matched filter may be a device having an impulse response matched to the pulse shape of a received wideband RF signal and may produce an impulse at its output when presented with RF energy which has a matching pulse shape. Monopulse detector 720 may further include an integrator (not shown) to integrate multiple monopulse signals to recover the transmitted information.

In one embodiment, tone-burst detector 730 may include a correlator (not shown) or a matched filter (not shown) adapted to detect tone-burst signals such as, for example, multicycle signals 520, 530, 540, 560, 570, or 580 of waveform 500 (FIG. 5). Tone-burst detector 730 may further include an integrator (not shown) to integrate multiple tone-burst signals to recover the transmitted information.

Demodulator 740 may be adapted to demodulate the monopulse signals of the received UWB waveform to recover the transmitted information in the received signal. Demodulator 750 may be adapted to demodulate the tone-burst signals of the received UWB waveform to recover the transmitted information in the received signal.

In one embodiment, timing 760 may generate a clock signal from the monopulse signals of the received UWB waveform and provide this clock signal to tone-burst detector 730, wherein tone-burst detector 730 may use the clock signal from timing 760 as a clock to process tone-burst signals. The clock signal generated by timing 760 may be synchronized with a transmitting device that generated the received UWB waveform. For example, timing 760 may include a PLL, and the monopulse signals of the received UWB waveform may be used as an input clock signal to the PLL. The PLL may generate an output clock signal that is synchronized with the transmitting device. Stated generally, the monopulse signals of the received UWB waveform may be used to process the multicycle signal by generating a clock from the monopulse signals and providing this clock to tone-burst detector 730, which is adapted to detect the tone-burst signals of the received UWB waveform.

Processor 770 may comprise, for example, one or more microprocessors, digital signal processors (DSP), microcontrollers, or the like. Generally, processor 770 may be used to process the received UWB waveforms. In one embodiment, if user information is transferred to receiver 700 using the tone-burst signals of the received UWB waveform, then processor 770 may be used to process the received user information. Processor 770 may also be used to assist in the processing of the received UWB waveform to determine distance and location information and to perform rate adaptation.

In one embodiment, processor 770 may be adapted to process the monopulse signals of a received UWB waveform to determine the quality of the communication link between receiver 700 and a transmitting device that generated the UWB waveform. For example, the BER of the information transmitted using the monopulse signals of the received UWB may be monitored by processor 770 to determine quality of the communication link. If the BER is determined to be above a predetermined threshold level, then a signal may be transmitted from receiver 700 to the transmitting device to command the transmitting device to reduce the transmission data rate for both information transmitted using the monopulse signals and information transmitted using the tone-burst signals.

In one embodiment, processor 770 may be adapted to process the monopulse signals of a received UWB waveform to determine distance information from a transmitting device or location information of the receiving device. Processor 770 may be used to determine the time of arrival (referred to as a "time stamp") of the monopulse signals of the received UWB waveform. In one embodiment, if three "time stamps" are determined, then processor 770 may determine the X, Y, and Z location of the transmitting device.

Although receiver 700 is illustrated as having several separate functional elements, one or more of the functional elements may be combined and may be implemented by combinations of software configured elements such as, for example, processors including digital signal processors (DSPs) and microcontrollers.

Turning to FIG. 8, a waveform 800 is illustrated. Waveform 800 may include a sinusoidal signal 810, respectively followed by sinusoidal signals 820, 830, 840, 850, 860, 870, 880, and 890. Waveform 800 may be referred to as a UWB waveform.

In one embodiment, waveform 800 has two types of signals having different durations. Signals 810, 850, and 890 may be designated as one type of signal and signals 820, 830, 840, 860, 870, and 880 may be designated as another type of signal. Signals 810, 850, and 890 may have relatively shorter time durations compared to signals 820, 830, 840, 860, 870, and 880. The durations of signals 810, 850, and 890 may be approximately equal to each other; the durations of signals 820, 830, 840, 860, 870, and 880 may be approximately equal to each other; and the durations of signals 810, 850, and 890 may be each relatively less than the durations of 820, 830, 840, 860, 870, and 880. The duration of signals 820, 830, 840, 860, 870, and 880 may be substantially longer compared to the durations of signals 810, 850, and 890, e.g., the duration of signal 820 may be at least two times as long as the duration of signal 810. In another embodiment, the duration of signal 820 may be at least ten times (10-to-1 ratio) as long as the duration of signal 810, although the scope of the present invention is not limited in this respect.

In the embodiment illustrated in FIG. 8, sinusoidal signals 820, 830, 840, 860, 870, and 880 have more zero-crossings and cycles compared to signals 810, 850, and 890. In this embodiment, signal 810 has two zero-crossings (labeled 811 and 812) and less than two cycles. Signals 850 and 890 may also have two zero-crossings and less than two cycles. Each of signals 820, 830, 840, 860, 870, and 880 may have at least two cycles and at least three zero-crossings.

Signals 810, 820, 830, 840, 850, 860, 870, 880, 890 may be generally referred to as an impulse, a pulsed signal, a pulse signal, a wideband RF signal, a RF impulse signal, a RF pulse signal, a pulsed RF signal, or a UWB signal. Signals 810, 850, and 890 may be also be referred to as monopulse signals. Signals 820, 830, 840, 860, 870, and 880 may be also be referred to as multicycle signals, multipulse signals, or subband pulse signals, burst signals, tone signals, or tone-burst signals. Referring briefly back to FIG. 7, detector 730 may be adapted to detect signals 820, 830, 840, 860, 870, and 880 of waveform 800 and detector 720 may be adapted to detect signals 810, 850, and 890 of waveform 800.

Turning back to FIG. 8, in one embodiment, the repetition frequency of the different types of signals of waveform 800 may vary. For example, waveform 800 may include fewer relatively shorter duration signals having fewer zero-crossings compared to a greater number of relatively longer duration signals having a greater number of zero-crossings. In the embodiment illustrated in FIG. 8, waveform 800 includes more longer duration signals than shorter duration signals. That is, waveform 800 includes three relatively shorter duration signals (e.g., signals 810, 850, and 890) and six relatively longer duration signals (e.g., signals 820, 830, 840, 860, 870, and 880), although the scope of the present invention is not limited in this respect. In other embodiments, waveform 800 may include more or fewer relatively shorter duration signals and may include more or fewer relatively longer duration signals.

Waveform 800 may be used to transfer information. In one embodiment, two types of signals of different durations may be used to transfer information in a communication system. For example, a UWB communication system may be implemented using waveform 800, wherein the relatively fewer, shorter duration signals (e.g., signals 810, 850, and 890) of waveform 800 may be used to transfer control, timing, security, and backup user information and the relatively greater number of longer duration signals may be used to transfer user information. In one embodiment, synchronization, connection setup and tear-down, rate adaptation, performance monitoring, location sensing, or backup user information may be performed using the relatively fewer, shorter duration signals (e.g., signals 810, 850, and 890) of waveform 800. The transfer of user information may be performed using the relatively longer duration signals (e.g., signals 820, 830, 840, 860, 870, and 880) of waveform 800.

Turning to FIG. 9, a waveform 900 is illustrated. Waveform 900 may include a sinusoidal signal 910, respectively followed by sinusoidal signals 920, 930, 940, 950, 960, 970, 980, and 990. Waveform 900 may be referred to as a UWB waveform.

In one embodiment, waveform 900 has two types of signals having different durations. Signals 910, 950, and 990 may be designated as one type of signal and signals 920, 930, 940, 960, 970, and 980 may be designated as another type of signal. Signals 910, 950, and 990 may have relatively shorter time durations compared to signals 920, 930, 940, 960, 970, and 980. The durations of signals 910, 950, and 990 may be approximately equal to each other; the durations of signals 920, 930, 940, 960, 970, and 980 may be approximately equal to each other; and the durations of signals 910, 950, and 990 may be each relatively less than the durations of 920, 930, 940, 960, 970, and 980. The duration of signals 920, 930, 940, 960, 970, and 980 may be substantially longer compared to the durations of signals 910, 950, and 990, e.g., the duration of signal 920 may be at least two times as long as the duration of signal 910. In another embodiment, the duration of signal 920 may be at least ten times (10-to-1 ratio) as long as the duration of signal 910, although the scope of the present invention is not limited in this respect.

In the embodiment illustrated in FIG. 9, sinusoidal signals 920, 930, 940, 960, 970, and 980 have more zero-crossings and cycles compared to signals 910, 950, and 990. In this embodiment, signal 910 has four zero-crossings (labeled 911, 912, 913, and 914) and less than three cycles. Signals 950 and 990 may also have four zero-crossings and less than three cycles. Each of signals 920, 930, 940, 960, 970, and 980 may have at least three cycles and at least five zero-crossings.

Signals 910, 920, 930, 940, 950, 960, 970, 980, 990 may be generally referred to as an impulse, a pulsed signal, a pulse signal, a wideband RF signal, a RF impulse signal, a RF pulse signal, a pulsed RF signal, or a UWB signal. Referring briefly back to FIG. 7, detector 730 may be adapted to detect signals 920, 930, 940, 960, 970, and 980 of waveform 900 and detector 720 may be adapted to detect signals 910, 950, and 990 of waveform 900.

In one embodiment, the repetition frequency of the different types of signals of waveform 900 may vary. For example, waveform 900 may include fewer relatively shorter duration signals having fewer zero-crossings compared to a greater number of relatively longer duration signals having a greater number of zero-crossings. In the embodiment illustrated in FIG. 9, waveform 900 may include more longer duration signals than shorter duration signals. That is, waveform 900 includes three relatively shorter duration signals (e.g., signals 910, 950, and 990) and six relatively longer duration signals (e.g., signals 920, 930, 940, 960, 970, and 980), although the scope of the present invention is not limited in this respect. In other embodiments, waveform 900 may include more or fewer relatively shorter duration signals and may include more or fewer relatively longer duration signals.

Waveform 900 may be used to transfer information. In one embodiment, two types of signals of different durations may be used to transfer information in a communication system. For example, a UWB communication system may be implemented using waveform 900, wherein the relatively fewer, shorter duration signals of waveform 900 may be used to transfer control, timing, security, and backup user information and the relatively greater number of longer duration signals may be used to transfer user information. In one embodiment, synchronization, connection setup and tear-down, rate adaptation, performance monitoring, location sensing, or backup user information may be performed using the relatively fewer, shorter duration signals 910, 950, and 990 of waveform 900. The transfer of user information may be performed using the relatively longer duration signals 920, 930, 940, 960, 970, and 980 of waveform 900.

While certain features of the invention have been illustrated and described herein, many modifications, substitutions, changes, and equivalents will now occur to those skilled in the art. It is, therefore, to be understood that the appended claims are intended to cover all such modifications and changes as fall within the scope of the invention.

## Claims

1. A method of ultra-wideband communication, comprising:
generating a waveform (500, 800) that comprises at least one monocycle signal (110, 510, 810) and at least one multicycle signal (310, 520, 820).

2. The method of claim 1, wherein a duration of the monocycle signal is less than a duration of the multicycle signal, the monocycle signal has fewer zero-crossings than the multicycle signal.

3. The method of claims 1 or 2, wherein an amplitude of the monocycle signal is greater than an amplitude of the multicycle signal.

4. The method of any preceding claim, wherein a duration of the multicycle signal is at least about two times greater than a duration of the monocycle signal.

5. The method of any preceding claim, further comprising:
transferring information at a first data rate using the at least one monocycle signal; and
transferring information at a second data rate using the at least one multicycle signal, wherein the first data rate is less than the second data rate.

6. The method of any of claims 1 to 4, further comprising:
using the at least one monocycle signal to transfer a first type of information; and
using the at least one multicycle signal to transfer a second type of information.

7. The method of claim 6, wherein the first type of information is control, timing, or security information and wherein the second type of information is user information.

8. The method of claim 6, wherein the first type of information is authentication information, authorization information, information to set up a communication path, information to tear down a communication path, synchronization information, information for multiple access coordination, information for data rate adaptation, or information to determine communication link quality between two devices and wherein the second type of information is spreadsheet information, word processing information, email information, web page information, a video file, an audio file, or a picture file.

9. The method of any of claims 1 to 4, further comprising:
providing a first communication channel to transfer information at a first data rate between a first device (610) and a second device (620) using the at least one monocycle signal; and
providing a second communication channel to transfer information at a second data rate between the first device (610) and the second device (620) using the at least one multicycle signal.

10. The method of claim 9, further comprising:
determining communication link quality between the first device (610) and the second device (620) using the at least one monocycle signal; and
altering the second data rate if the communication link quality is below a predetermined level.

11. The method of any of claims 1 to 4, further comprising:
detecting the monocycle signal;
detecting the multicycle signal; and
processing the multicycle signal using the monocycle signal.

12. The method of any preceding claim, wherein generating further comprises generating the waveform that comprises the at least one monocycle signal and the at least one multicycle signal to transfer information from a first wireless (610) device to a second wireless device (620).

13. The method of claim 12, further comprising synchronizing timing between the first wireless device (610) and the second wireless device (620) using the at least one monocycle signal.

14. The method of claim 12, further comprising:
determining a location of the second wireless device (620) using the at least one monocycle signal.

15. The method of claim 12, further comprising:
determining a distance between the first wireless device (610) and the second wireless device (620) using the at least one monocycle signal.

16. The method of any of claims 1 to 4, further comprising:
transferring control information between at least two wireless devices (610, 620) using the monocycle signal; and
transferring user information between the at least two wireless devices (610, 620) using the multicycle signal.

17. The method of any of claims 1 to 4, further comprising:
transferring information between at least two devices (610, 620) using the at least one monocycle signal, a first multicycle signal, and a second multicycle signal, wherein a duration of the monocycle signal is less than a duration of the first multicycle signal and the duration of the first multicycle signal is approximately equal to the duration of the second multicycle signal and wherein the monocycle signal has fewer zero-crossings than the first multicycle signal and the second multicycle signal.

18. The method of claim 17, wherein the at least two devices are wireless devices (610, 620) and further comprising:
transferring control information between the at least two devices (610, 620) using the monocycle signal; and
transferring user information between the at least two devices (610, 620) using the first and second multicycle signals.

19. The method of claims 17 or 18, wherein a maximum amplitude of the monocycle signal is greater than maximum amplitudes of the first and second multicycle signals.

20. An apparatus for receiving in ultra-wideband communications, comprising means for processing a received waveform (500, 800) that comprises at least one monocycle signal (110, 510, 810) and at least one first multicycle signal (310, 520, 820).

21. The apparatus of claim 20, wherein the durations of the at least one first multicycle signal is greater than a duration of the at least one monocycle signal and wherein the at least one first multicycle signal has more zero-crossings than the at least one monocycle signal.

22. The apparatus of claims 20 or 21, wherein the received waveform (500, 800) further comprises at least one second multicycle signal, wherein durations of the first and second multicycle signals are each greater than a duration of the at least one monocycle signal and wherein the first and second multicycle pulsed signals each have more zero-crossings than the at least one monocycle signal.

23. The apparatus of any of claims 20 to 22, wherein the means for processing includes a first detector (720) to detect the at least one monocycle signal and a second detector (730) to detect the at least one first and second multicycle signals.

24. The apparatus of claim 23, wherein the first detector (720) includes a matched filter and wherein the second detector (730) includes a matched filter.

25. The apparatus of any of claims 20 to 24, wherein an amplitude of the at least one monocycle pulsed signal is greater than an amplitude of the at least one first and second multicycle signals.

26. The apparatus of any of claims 20 to 25, further comprising an antenna (710) having an output terminal coupled to an input terminal of the means for processing (715, 710-770), wherein the antenna (710) is adapted to receive the received waveform (500, 800).

27. The apparatus of any of claims 20 to 26, wherein the means for processing is a circuit adapted to process (715, 710-770) the received waveform (500, 800).

28. An apparatus for transmitting in ultra-wideband communications, comprising means for generating a waveform that comprises at least one monocycle signal and at least one first multicycle signal.

29. The apparatus of claim 28, wherein the durations of the at least one first multicycle signal is greater than a duration of the at least one monocycle signal and wherein the at least one first multicycle signal has more zero-crossings than the at least one monocycle signal.

30. The apparatus of claims 28 or 29, wherein the waveform (500, 800) further comprises at least one second multicycle signal, wherein durations of the first and second multicycle signals are each greater than a duration of the at least one monocycle signal and wherein the first and second multicycle pulsed signals each have more zero-crossings than the at least one monocycle signal.

31. The apparatus of any of claims 28 to 30, wherein an amplitude of the at least one monocycle pulsed signal is greater than an amplitude of the at least one first and second multicycle signals.

32. The apparatus of any of claims 28 to 31, wherein the means for generating is a circuit adapted to generate the waveform (500, 800).

33. The apparatus of any of claims 28 to 32, further comprising an antenna adapted to transmit the waveform (500, 800).

34. A communications system comprising one or more wireless devices (610, 620, 700) for use in communication over one or more communication links (630), wherein the wireless devices (610, 620, 700) comprise the apparatus of any of claims 20 to 33.

## Patentansprüche

1. Verfahren der Ultrabreitbandkommunikation, umfassend:
Erzeugen einer Wellenform (500, 800), die mindestens ein Einperiodensignal (110, 510, 810) und mindestens ein Mehrperiodensignal (310, 520, 820) umfasst.

2. Verfahren nach Anspruch 1, wobei eine Dauer des Einperiodensignals kleiner als eine Dauer des Mehrperiodensignals ist, das Einperiodensignal weniger Nulldurchgänge als das Mehrperiodensignal hat.

3. Verfahren nach Anspruch 1 oder 2, wobei eine Amplitude des Einperiodensignals größer als eine Amplitude des Mehrperiodensignals ist.

4. Verfahren nach einem der vorhergehenden Ansprüche, wobei eine Dauer des Mehrperiodensignals mindestens etwa zweimal so groß wie eine Dauer des Einperiodensignals ist.

5. Verfahren nach einem der vorhergehenden Ansprüche, ferner umfassend:
Übertragen von Informationen mit einer ersten Datenrate unter Verwendung des mindestens einen Einperiodensignals; und
Übertragen von Informationen mit einer zweiten Datenrate unter Verwendung des mindestens einen Mehrperiodensignals, wobei die erste Datenrate kleiner als die zweite Datenrate ist.

6. Verfahren nach einem der Ansprüche 1 bis 4, ferner umfassend:
Verwenden des mindestens einen Einperiodensignals zum Übertragen einer ersten Art von Informationen;
Verwenden des mindestens einen Mehrperiodensignals zum Übertragen eine zweiten Art von Informationen.

7. Verfahren nach Anspruch 6, wobei die erste Art von Informationen Steuer-, Zeitgeber- oder Sicherheitsinformationen sind und wobei die zweite Art von Informationen Benutzerinformationen sind.

8. Verfahren nach Anspruch 6, wobei die erste Art von Informationen Echtheitsprüfungsinformationen, Genehmigungsinformationen, Informationen zum Einrichten eines Kommunikationsweges, Informationen zum Schließen eines Kommunikationsweges, Synchronisierungsinformationen, Informationen zur Mehrfachzugangskoordination, Informationen zur Datenratenanpassung oder Informationen zum Feststellen der Qualität der Kommunikationsverbindung zwischen zwei Vorrichtungen sind und wobei die zweite Art von Informationen Tabellenkalkulationsinformationen, Textverarbeitungsinformationen, Emailinformationen, Website-Informationen, eine Videodatei, eine Audiodatei oder ein Bilddatei sind.

9. Verfahren nach einem der Ansprüche 1 bis 4, ferner umfassend:
Bereitstellen eines ersten Kommunikationskanals zum Übertragen von Informationen mit einer ersten Datenrate zwischen einer ersten Vorrichtung (610) und einer zweiten Vorrichtung (620) unter Verwendung des mindestens einen Einperiodensignals; und
Bereitstellen eines zweiten Kommunikationskanals zum Übertragen von Informationen mit einer zweiten Datenrate zwischen der ersten Vorrichtung (610) und der zweiten Vorrichtung (620) unter Verwendung des mindestens einen Mehrperiodensignals.

10. Verfahren nach Anspruch 9, ferner umfassend:
Feststellen der Qualität der Kommunikationsverbindung zwischen der ersten Vorrichtung (610) und der zweiten Vorrichtung (620) unter Verwendung des mindestens einen Einperiodensignals; und
Ändern der zweiten Datenrate, wenn die Qualität der Kommunikationsverbindung unter einem vorgegebenen Niveau liegt.

11. Verfahren nach einem der Ansprüche 1 bis 4, ferner umfassend:
Feststellen des Einperiodensignals;
Feststellen des Mehrperiodensignals; und
Verarbeiten des Mehrperiodensignals unter Verwendung des Einperiodensignals.

12. Verfahren nach einem der vorhergehenden Ansprüche, wobei das Erzeugen ferner das Erzeugen der Wellenform umfasst, die das mindestens eine Einperiodensignal und das mindestens eine Mehrperiodensignal umfasst, um Informationen von einer ersten drahtlosen Vorrichtung (610) zu einer zweiten drahtlosen Vorrichtung (620) zu übertragen.

13. Verfahren nach Anspruch 12, das ferner das Synchronisieren der Zeitsteuerung zwischen der ersten drahtlosen Vorrichtung (610) und der zweiten drahtlosen Vorrichtung (620) unter Verwendung des mindestens einen Einperiodensignals umfasst.

14. Verfahren nach Anspruch 12, ferner umfassend:
Feststellen eines Ortes der zweiten drahtlosen Vorrichtung (620) unter Verwendung des mindestens einen Einperiodensignals.

15. Verfahren nach Anspruch 12, ferner umfassend:
Feststellen eines Abstandes zwischen der ersten drahtlosen Vorrichtung (610) und der zweiten drahtlosen Vorrichtung (620) unter Verwendung des mindestens einen Einperiodensignals.

16. Verfahren nach einem der Ansprüche 1 bis 4, ferner umfassend:
Übertragen von Steuerinformationen zwischen mindestens zwei drahtlosen Vorrichtungen (610, 620) unter Verwendung des Einperiodensignals; und
Übertragen von Benutzerinformationen zwischen den mindestens zwei drahtlosen Vorrichtungen (610, 620) unter Verwendung des Mehrperiodensignals.

17. Verfahren nach einem der Ansprüche 1 bis 4, ferner umfassend:
Übertragen von Informationen zwischen mindestens zwei Vorrichtungen (610, 620) unter Verwendung des mindestens einen Einperiodensignals, eines ersten Mehrperiodensignals und eines zweiten Mehrperiodensignals, wobei eine Dauer des Einperiodensignals kleiner als eine Dauer des ersten Mehrperiodensignals ist und die Dauer des ersten Mehrperiodensignals ungefähr gleich der Dauer des zweiten Mehrperiodensignals ist und wobei das Einperiodensignal weniger Nulldurchgänge als das erste Mehrperiodensignal und das zweite Mehrperiodensignal hat.

18. Verfahren nach Anspruch 17, wobei die mindestens zwei Vorrichtungen drahtlose Vorrichtungen (610, 620) sind und das ferner folgendes umfasst:
Übertragen von Steuerinformationen zwischen den mindestens zwei Vorrichtungen (610, 620) unter Verwendung des Einperiodensignals; und
Übertragen von Benutzerinformationen zwischen den mindestens zwei Vorrichtungen (610, 620) unter Verwendung des ersten und zweiten Mehrperiodensignals.

19. Verfahren nach Anspruch 17 oder 18, wobei eine maximale Amplitude des Einperiodensignals größer als die maximalen Amplituden des ersten und zweiten Mehrperiodensignals ist.

20. Vorrichtung zum Empfangen in Ultrabreitbandkommunikation, die Mittel zum Verarbeiten einer empfangenen Wellenform (500, 800) umfasst, welche mindestens ein Einperiodensignal (110, 510, 810) und mindestens ein erstes Mehrperiodensignal (310, 520, 820) umfasst.

21. Vorrichtung nach Anspruch 20, wobei die Dauer des mindestens einen ersten Mehrperiodensignals größer als eine Dauer des mindestens einen Einperiodensignals ist und wobei das mindestens eine erste Mehrperiodensignal mehr Nulldurchgänge als das mindestens eine Einperiodensignal hat.

22. Vorrichtung nach Anspruch 20 oder 21, wobei die empfangene Wellenform (500, 800) ferner mindestens ein zweites Mehrperiodensignal umfasst, wobei die Dauer des ersten und zweiten Mehrperiodensignals jeweils größer als eine Dauer des mindestens einen Einperiodensignals ist und wobei das erste und zweite Mehrperiodenimpulssignal jeweils mehr Nulldurchgänge als das mindestens eine Einperiodensignal hat.

23. Vorrichtung nach einem der Ansprüche 20 bis 22, wobei die Mittel zum Verarbeiten einen ersten Detektor (720) zum Feststellen des mindestens einen Einperiodensignals und einen zweiten Detektor (730) zum Feststellen des mindestens einen ersten und zweiten Mehrperiodensignals umfasst.

24. Vorrichtung nach Anspruch 23, wobei der erste Detektor (720) ein signalangepasstes Filter umfasst und wobei der zweite Detektor (730) ein signalangepasstes Filter umfasst.

25. Vorrichtung nach einem der Ansprüche 20 bis 24, wobei eine Amplitude des mindestens einen Einperiodenimpulssignals größer eine Amplitude des mindestens einen ersten und zweiten Mehrperiodensignals ist.

26. Vorrichtung nach einem der Ansprüche 20 bis 25, die ferner eine Antenne (710) umfasst, welche eine Ausgangsklemme hat, die an eine Eingangsklemme des Mittels zum Verarbeiten (715, 710-770) angeschlossen ist, wobei die Antenne (710) zum Empfangen der empfangenen Wellenform (500, 800) ausgelegt ist.

27. Vorrichtung nach einem der Ansprüche 20 bis 26, wobei das Mittel zum Verarbeiten eine Schaltung ist, die zum Verarbeiten (715, 710-770) der empfangenen Wellenform (500, 800) ausgelegt ist.

28. Vorrichtung zum Senden in Ultrabreitbandkommunikation, die Mittel zum Erzeugen einer Wellenform umfasst, welche mindestens ein Einperiodensignal und mindestens ein erstes Mehrperiodensignal umfasst.

29. Vorrichtung nach Anspruch 28, wobei die Dauer des mindestens einen ersten Mehrperiodensignals größer als eine Dauer des mindestens einen Einperiodensignals ist und wobei das mindestens eine erste Mehrperiodensignal mehr Nulldurchgänge als das mindestens eine Einperiodensignal hat.

30. Vorrichtung nach Anspruch 28 oder 29, wobei die Wellenform (500, 800) ferner mindestens ein zweites Mehrperiodensignal umfasst, wobei die Dauer des ersten und zweiten Mehrperiodensignals jeweils größer als eine Dauer des mindestens einen Einperiodensignals ist und wobei das erste und zweite Mehrperiodenimpulssignal jeweils mehr Nulldurchgänge als das mindestens eine Einperiodensignal hat.

31. Vorrichtung nach einem der Ansprüche 28 bis 30, wobei eine Amplitude des mindestens einen Einperiodenimpulssignals größer eine Amplitude des mindestens einen ersten und zweiten Mehrperiodensignals ist.

32. Vorrichtung nach einem der Ansprüche 28 bis 31, wobei das Mittel zum Erzeugen eine Schaltung ist, die zum Erzeugen der Wellenform (500, 800) ausgelegt ist.

33. Vorrichtung nach einem der Ansprüche 28 bis 32, die ferner eine Antenne umfasst, welche zum Senden der Wellenform (500, 800) ausgelegt ist.

34. Kommunikationssystem, das ein oder mehrere drahtlose Vorrichtungen (610, 620, 700) zur Verwendung bei der Kommunikation über eine oder mehrere Kommunikationsverbindungen (630) umfasst, wobei die drahtlosen Vorrichtungen (610, 620, 700) die Vorrichtung nach einem der Ansprüche 20 bis 33 umfassen.

## Revendications

1. Procédé de communication à bande ultra-large, comprenant :
la génération d'une forme d'onde (500, 800) qui comprend au moins un signal monocycle (110, 510, 810) et au moins un signal multicycle (310, 520, 820).

2. Procédé selon la revendication 1, dans lequel une durée du signal monocycle est inférieure à une durée du signal multicycle, le signal monocycle comporte un nombre moindre de croisements zéro que le signal multicycle.

3. Procédé selon les revendications 1 ou 2, dans lequel une amplitude du signal monocycle est supérieure à une amplitude du signal multicycle.

4. Procédé selon l'une quelconque des revendications précédentes, dans lequel une durée du signal multicycle est au moins environ deux fois supérieure à une durée du signal monocycle.

5. Procédé selon l'une quelconque des revendications précédentes, comprenant de plus :
le transfert d'informations à une première vitesse de données utilisant le au moins un signal monocycle ; et
le transfert des informations à une seconde vitesse de données utilisant le au moins un signal multicycle, dans lequel la première vitesse de données est inférieure à la seconde vitesse de données.

6. Procédé selon l'une quelconque des revendications 1 à 4, comprenant de plus :
l'utilisation du au moins un signal monocycle pour transférer un premier type d'informations ; et
l'utilisation du au moins un signal multicycle pour transférer un second type d'informations.

7. Procédé selon la revendication 6, dans lequel le premier type d'information concerne des informations de commande, de temporisation ou de sécurité et dans lequel le second type d'information concerne les informations d'utilisateurs.

8. Procédé selon la revendication 6, dans lequel le premier type d'information concerne des informations d'authentification, des informations d'autorisation, des informations pour établir une voie de communication, des informations pour détruire une voie de communication, des informations de synchronisation, des informations pour la coordination d'accès multiples, des informations pour l'adaptation de vitesses de données ou des informations pour déterminer la qualité de liaison de communication entre deux dispositifs, et dans lequel le second type d'information concerne des informations de tableau, des informations de traitement de texte, des informations de courriels, des informations de pages web, un fichier vidéo, un fichier audio ou un fichier images.

9. Procédé selon l'une quelconque des revendications 1 à 4, comprenant de plus :
la mise en place d'un premier canal de communication pour transférer les informations à une première vitesse de données entre un premier dispositif (610) et un second dispositif (620) en utilisant le au moins un signal monocycle ; et
la mise en place d'un second canal de communication pour transférer les informations à une seconde vitesse de données entre le premier dispositif (610) et le second dispositif (620) en utilisant le au moins un signal multicycle.

10. Procédé selon la revendication 9, comprenant de plus :
la détermination de la qualité de la liaison de communication entre le premier dispositif (610) et le second dispositif (620) en utilisant le au moins un signal monocycle ; et
la modification de la seconde vitesse de données si la qualité de liaison de communication est inférieure à un niveau prédéterminé.

11. Procédé selon l'une quelconque des revendications 1 à 4, comprenant de plus :
la détection du signal monocycle;
la détection du signal multicycle ; et
le traitement du signal multicycle en utilisant le signal monocycle.

12. Procédé selon l'une quelconque des revendications précédentes, dans laquelle la génération comprend de plus la génération de la forme d'onde qui comprend le au moins un signal monocycle et le au moins un signal multicycle pour transférer les informations à partir d'un premier dispositif sans fil (610) à un second dispositif sans fil (620).

13. Procédé selon la revendication 12, comprenant de plus la temporisation de synchronisation entre le premier dispositif sans fil (610) et le second dispositif sans fil (620) en utilisant le au moins un signal monocycle.

14. Procédé selon la revendication 12, comprenant de plus :
la détermination d'une position du second dispositif sans fil (620) en utilisant le au moins un signal monocycle.

15. Procédé selon la revendication 12, comprenant de plus :
la détermination d'une distance entre le premier dispositif sans fil (610) et le second dispositif sans fil (620) en utilisant le au moins un signal monocycle.

16. Procédé selon l'une quelconque des revendications 1 à 4, comprenant de plus :
le transfert des informations de commande entre au moins deux dispositifs sans fil (610, 620) en utilisant le signal monocycle ; et
le transfert des informations d'utilisateur entre le au moins deux dispositifs sans fil (610, 620) en utilisant le signal multicycle.

17. Procédé selon l'une quelconque des revendications 1 à 4, comprenant de plus :
le transfert des informations entre au moins deux dispositifs (610, 620) en utilisant le au moins un signal monocycle, un premier signal multicycle et un second signal multicycle, dans lequel une durée du signal monocycle est inférieure à une durée du premier signal multicycle et la durée du premier signal multicycle est approximativement égale à la durée du second signal multicycle et dans lequel le signal monocycle comporte moins de croisements zéro que le premier signal multicycle et le second signal multicycle.

18. Procédé selon la revendication 17, dans lequel les au moins deux dispositifs sont des dispositifs sans fil (610, 620) et comprennent de plus :
le transfert des informations de commande entre les au moins deux dispositifs (610, 620) en utilisant le signal monocycle ; et
le transfert d'informations d'utilisateur entre les au moins deux dispositifs (610, 620) en utilisant les premier et second signaux multicycles.

19. Procédé selon les revendications 17 ou 18, dans lequel une amplitude maximum du signal monocycle est supérieure aux amplitudes maximums des premier et second signaux multicycles.

20. Appareil pour recevoir en communications à bande ultra-large, comprenant des moyens pour traiter une forme d'onde reçue (500, 800) qui comprend au moins un signal monocycle (110, 510, 810) et au moins un premier signal multicycle (310, 520, 820).

21. Appareil selon la revendication 20, dans lequel les durées du au moins un signal multicycle est supérieure à au moins une durée du au moins un signal monocycle, et dans lequel le au moins un signal multicycle comporte davantage de croisements zéro que le au moins un signal monocycle.

22. Appareil selon la revendication 20 ou 21, dans lequel la forme d'onde reçue (500, 800) comprend de plus au moins un second signal multicycle, dans lequel les durées des premier et second signaux multicycles sont chacune supérieures à une durée du au moins un signal monocycle, et dans lequel les premier et second signaux pulsés multicycles comportent chacun davantage de croisements zéro que le au moins un signal monocycle.

23. Appareil selon l'une quelconque des revendications 20 à 22, dans lequel les moyens pour traiter comprennent un premier détecteur (720) pour détecter le au moins un signal monocycle et un second détecteur (730) pour détecter les au moins un premier et second signaux multicycles.

24. Appareil selon la revendication 23, dans lequel le premier détecteur (720) comprend un filtre assorti dans lequel le second détecteur (730) comprend un filtre assorti.

25. Appareil selon l'une quelconque des revendications 20 à 24, dans lequel une amplitude du au moins un signal pulsé monocycle est supérieure à une amplitude des au moins un et second signaux multicycles.

26. Appareil selon l'une quelconque des revendications 20 à 25, comprenant de plus une antenne (710) ayant un terminal de sortie couplé à un terminal d'entrée des moyens pour traiter (715, 710-770), dans lequel l'antenne (710) est apte à recevoir la forme d'onde reçue (500, 800).

27. Appareil selon l'une quelconque des revendications 20 à 26, dans lequel les moyens pour traiter sont un circuit apte à traiter (715, 710-770) la forme d'onde reçue (500, 800).

28. Appareil pour transmettre en communications à bande ultra-large, comprenant des moyens pour générer une forme d'onde qui comprend au moins un signal monocycle et au moins un premier signal multicycle.

29. Appareil selon la revendication 28, dans lequel les durées du au moins un premier signal multicycle sont supérieures à une durée du au moins un signal monocycle et dans lequel le au moins un premier signal multicycle comporte davantage de croisements zéro que le au moins un signal monocycle.

30. Appareil selon les revendications 28 ou 29, dans lequel la forme d'onde (500, 800) comprend de plus au moins un second signal multicycle, dans lequel les durées des premier et second signaux multicycles sont chacune supérieures à une durée du au moins un signal monocycle et dans lequel les premier et second signaux pulsés multicycles comportent chacun davantage de croisements zéro que le au moins un signal monocycle.

31. Appareil selon l'une quelconque des revendications 28 à 30, dans lequel une amplitude du au moins un signal pulsé monocycle est supérieure à une amplitude des au moins un premier et second signaux multicycles.

32. Appareil selon l'une quelconque des revendications 28 à 31, dans lequel les moyens pour la génération sont un circuit apte à générer la forme d'onde (500, 800).

33. Appareil selon l'une quelconque des revendications 28 à 32, comprenant de plus une antenne apte à transmettre la forme d'onde (500, 800).

34. Système de communications comprenant un ou plusieurs dispositifs sans fil (610, 620, 700) pour l'utilisation dans la communication par une ou plusieurs liaisons de communication (630), dans lequel les dispositifs sans fil (610, 620, 700) comprennent l'appareil selon l'une quelconque des revendications 20 à 33.
